Europäisches Patentamt

European Patent Office

Office européen des brevets

(19)

(11) Numéro de publication: **0 287 484 B1**

# (12) FASCICULE DE BREVET EUROPEEN

(45) Date de publication du fascicule du brevet:
24.10.90

(21) Numéro de dépôt: **88420119.5**

(22) Date de dépôt: **12.04.88**

(51) Int. Cl.⁵: **F16P 3/08**, B01J 19/28
// A47J37/04, B01F15/00,
B24B31/12, F26B11/02,
F27B7/32

(54) Perfectionnements aux machines industrielles de traitement à cuve tournante.

(30) Priorité: **14.04.87 FR 8705467**

(43) Date de publication de la demande:
**19.10.88 Bulletin 88/42**

(45) Mention de la délivrance du brevet:
**24.10.90 Bulletin 90/43**

(84) Etats contractants désignés:
**AT CH DE ES GB IT LI NL**

(56) Documents cités:
**GB-A- 2 029 292
GB-A- 2 070 714
US-A- 2 518 548**

(73) Titulaire: **Perrot, Yvan, Port Lesney, F-39600 Arbois(FR)**

(72) Inventeur: **Perrot, Yvan, Port Lesney, F-39600 Arbois(FR)**

(74) Mandataire: **Monnier, Guy et al, Cabinet
Monnier 150 Cours Lafayette B.P. 3058, F-69393 Lyon
Cédex 03(FR)**

ACTORUM AG

**Description**

La présente invention a trait aux machines industrielles de traitement à cuve tournante, du genre de celles utilisées pour l'ébavurage, le dégraissage, le séchage ou la cryogénisation de pièces en vrac, ou dans les techniques de broyage, de lavage, de tannage, etc...

On sait que dans les machines de ce genre, la cuve, le plus souvent établie à un profil polygonal en section, comporte sur sa paroi latérale une ouverture qui s'étend pratiquement sur toute sa longueur et qui est associée à une porte, laquelle doit évidemment être manoeuvrée à l'ouverture pour le chargement et le déchargement de la cuve, à la fermeture lors du traitement par rotation (voir par exemple GB-A 2 029 292). Suivant les cas, cette porte d'accès est montée sur la cuve à pivotement ou à coulissement, mais dans tous les cas il est bien entendu indispensable de prévoir un mécanisme de verrouillage assurant sa retenue efficace à la position fermée ; or, l'expérience démontre que la présence de ce mécanisme complique et rend fastidieuses les manoeuvres de chargement et de déchargement.

C'est à cet inconvénient qu'entend principalement remédier l'invention, laquelle a pour objet la machine industrielle à cuve tournante telle que définie à la revendications 1.

En fait l'invention consiste essentiellement à assurer l'entraînement en rotation de la cuve par l'intermédiaire de la porte qui est réunie à ladite cuve par un système de biellettes latérales et dont le déplacement angulaire par rapport à celle-ci est limité par effet de butée.

On conçoit que moyennant un agencement convenable de l'ensemble, on peut faire en sorte que la porte soit maintenue en position fermée lorsque l'entraînement s'effectue dans un sens, et qu'au contraire elle soit automatiquement amenée en position ouverte lorsque le sens d'entraînement est inversé.

Le dessin annexé, donné à titre d'exemple, permettra de mieux comprendre l'invention, les caractéristique qu'elle présente et les avantages qu'elle est susceptible de procurer :

Fig. 1 est une vue en perspective illustrant l'agencement général d'une machine à cuve tournante établie conformément à l'invention.

Fig. 2 est une coupe axiale de détail montrant l'agencement du dispositif qui assure l'entraînement en rotation de la cuve.

Fig. 3 est une coupe à plus grande échelle encore, représentant la liaison entre l'un des côtés de la porte et le bras latéral qui assure l'entraînement de celle-ci.

Fig. 4, 5 et 6 sont des vues de côté illustrant schématiquement le fonctionnement de l'ensemble.

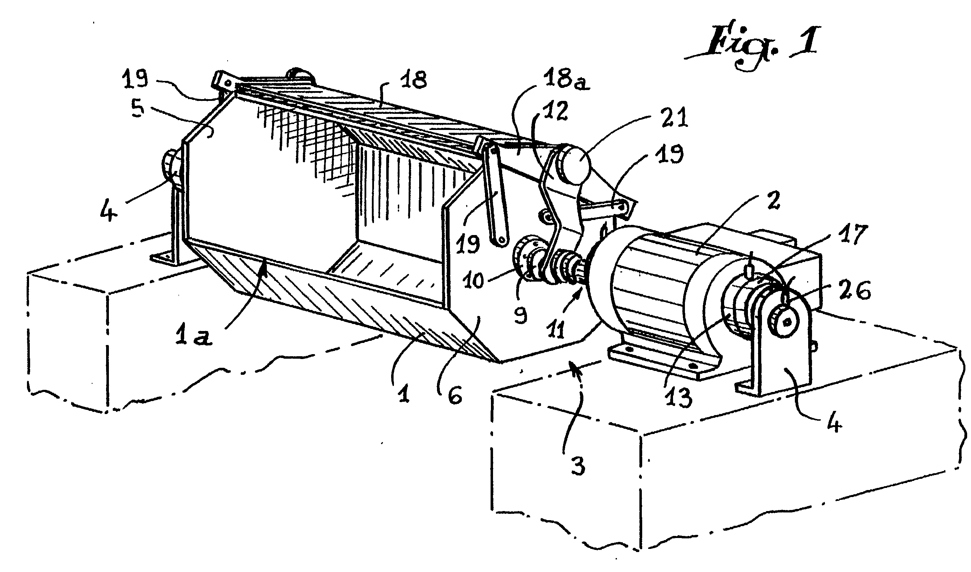

En fig. 1, la référence 1 désigne la cuve tournante d'une machine d'ébavurage. L'entraînement en rotation de cette cuve 1 est opéré à l'aide d'un moto-réducteur électrique 2, l'ensemble 1-2 étant supporté au-dessus d'une fosse 3 à l'aide de paliers 4. La cuve 2 présente en section transversale un profil octogonal et sa paroi longitudinale est découpée d'une ouverture d'accès 1a qui occupe deux facettes contiguës du profil précité.

Le flasque latéral 5 de la cuve 1 coopère directement avec le palier 4 correspondant alors que la flasque opposé 6 est supporté, avec interposition d'un système d'auto-centrage 7, par l'extrémité d'un arbre 8 sur lequel est calée une douille 9 reliée au flasque 6 par une cloche 10 en une matière élastiquement déformable.

Sur l'arbre 8 tourne librement un arbre tubulaire 11 qui est entraîné en rotation par l'organe de sortie du moto-réducteur 2. L'extrémité de cet arbre 11 qui est tournée du côté du flasque 6 est solidaire du moyeu d'un bras radial 12, tandis que l'extrémité opposée porte un plateau 13 équipé d'un bobinage annulaire 14 qui est branché sur le circuit électrique du moto-réducteur 2. Ce bobinage 14 est destiné à attirer magnétiquement un disque 15 qui est rendu angulairement solidaire de l'arbre 8 tout en étant susceptible de coulisser axialement sur celui-ci ; des ressorts 16 tendent à appliquer ce disque 15 contre une couronne de freinage 17 immobilisée angulairement par fixation contre le palier 4.

Comme illustré en fig. 1, le bras 12 solidaire de l'arbre tubulaire 11 est contre-coudé de façon à ce que son extrémité supérieure puisse venir coopérer avec l'un des deux flasques latéraux d'une porte 18 destinée à l'obturation de l'ouverture d'accès 1a de la cuve 1. Cette porte présente en section transversale un profil en forme d'accent circonflexe afin d'être en mesure de coiffer l'ouverture précitée.

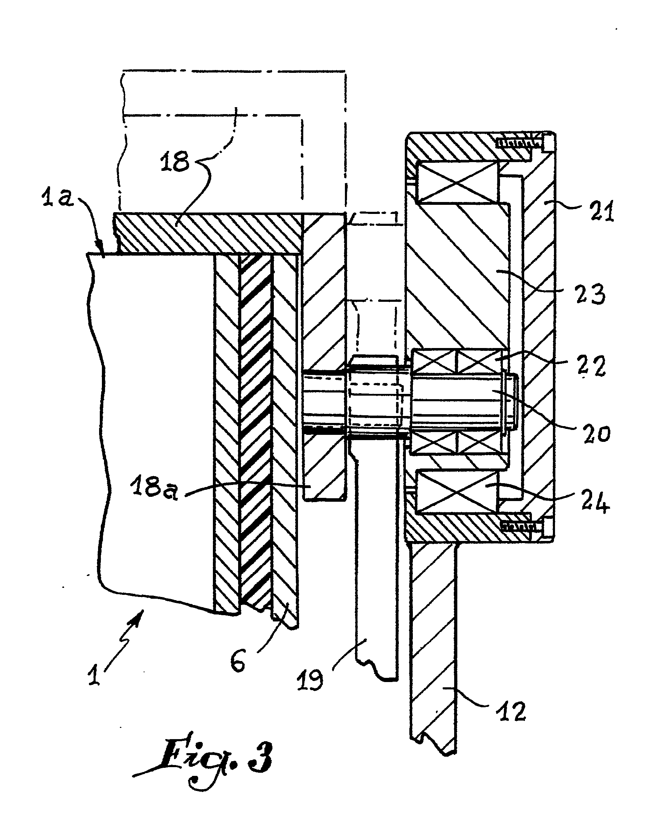

Chacun des côtés de la porte 18 est relié au flasque 5 ou 6 correspondant de la cuve 1 à l'aide de deux biellettes 19, qui sont fixées à pivotement sur chaque flasque de façon à déterminer deux positions extrêmes d'ouverture et de fermeture pour lesquelles l'un ou l'autre des deux bords longitudinaux de ladite porte vient en butée contre la paroi de la cuve 1. Par ailleurs et comme montré en fig. 3, le côté 18a de cette porte 18 qui est tourné en direction du bras 12 est solidaire d'un goujon horizontal 20 qui pénètre à l'intérieur d'un petit carter cylindrique 21 fixé en bout du bras précité ; un roulement double 22 assure le montage excentré de ce goujon 20 dans un excentrique 23 retenu à l'intérieur du carter 21 par un roulement 24.

Pour exposer le fonctionnement de la machine suivant l'invention, on supposera tout d'abord que la cuve 1 se trouve à l'arrêt avec la porte 18 positionnée de façon à découvrir l'ouverture 1a en vue de son chargement. Une fois celui-ci terminé, l'opérateur met sous tension le moto-réducteur 2, ce qui a pour effet de déplacer angulairement la bras 12. Le bobinage 14 n'est pas excité, si bien que le disque 15 est appliqué contre la couronne 17 qui assure l'immobilisation angulaire de l'arbre 8 et de la cuve 1.

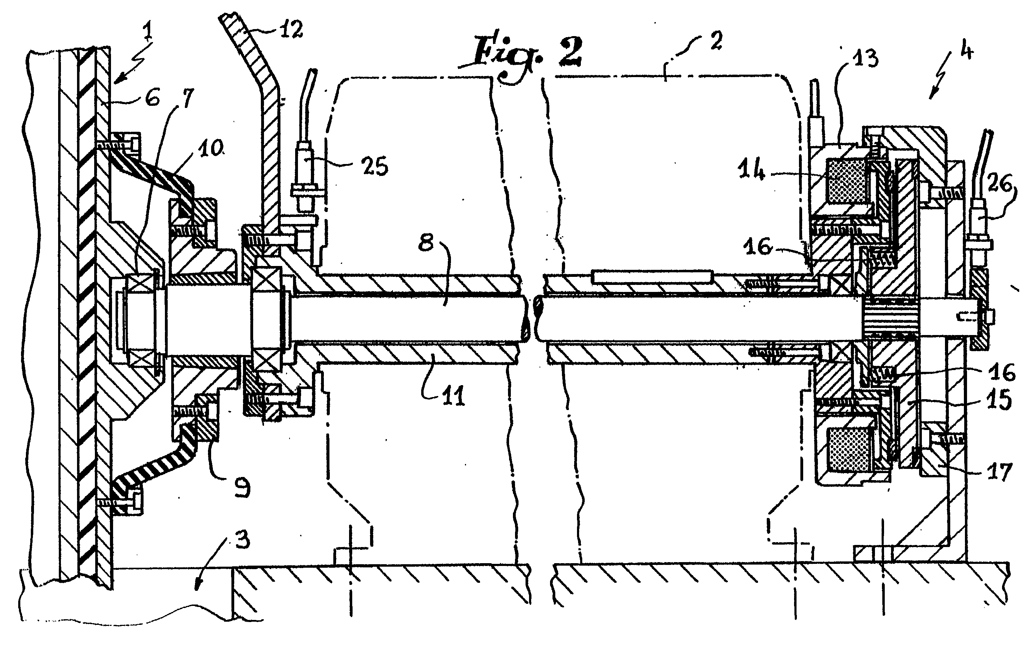

Le déplacement du bras 12 a pour effet de manoeuvrer à la fermeture la porte 18, l'excentrique 23 permettant, par rotation dans le carter 21, audit bras de s'allonger pour autoriser la translation de ladite porte de la position ouverte à la position fermée. A ce moment, un palpeur 25 (fig. 2), inséré sur le circuit reliant le bobinage 14 à l'alimentation électrique du moto-réducteur 2 et commandé par un bossage ou came prévu sur le moyeu du bras 12, assure l'alimentation du bobinage 14 qui attire le disque 15 à l'encontre des ressorts 16. Ce disque 15 est en conséquence libéré et permet à l'arbre 8 et à la cuve 1 de se déplacer en rotation, ce déplacement s'effectuant uniquement à travers le bras 12 qui agit sur la porte 18, laquelle bute contre ladite cuve en position fermée.

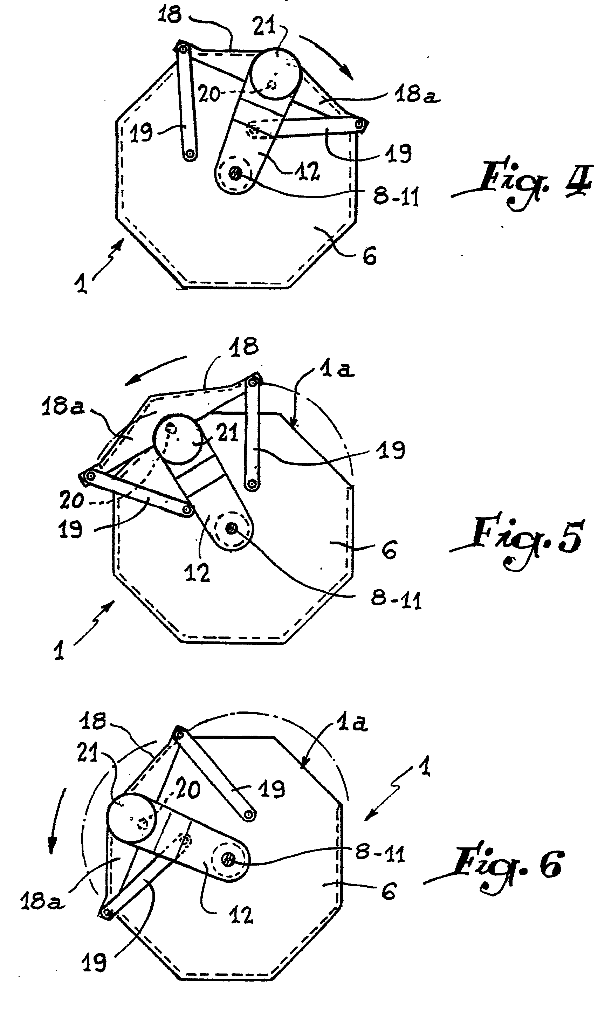

On se trouve alors à la position illustrée en fig. 4 et l'on comprend que l'entraînement en rotation de la cuve 1 peut se poursuivre jusqu'à la fin du traitement des pièces que celle-ci contient. On observera que la liaison assurée par l'ensemble 14-15 entre les deux arbres 8 et 11 s'oppose radicalement à toute ouverture intempestive de la porte 18 dans le cas où un déplacement inopiné de la charge sous l'effet d'un balourd viendrait à accélérer brusquement la rotation de la cuve 1 jusqu'à une vitesse supérieure à celle que le bras 12 impartit à ladite porte.

En fin de traitement, le moto-réducteur 2 est arrêté. La coupure du courant provoque le blocage immédiat de la cuve 1 sous l'effet des ressorts 16, du fait que le bobinage 14 n'est plus alimenté. Pour assurer l'ouverture automatique de la porte 18, il suffit à l'opérateur d'inverser l'alimentation du moto-réducteur 2, afin que le bras 12 opère le glissement de ladite porte à la manière illustrée en fig. 5. Lorsque l'ouverture 1a a été complètement découverte par effet de butée, la cuve 1, libérée dès la remise sous tension du moto-réducteur, tourne à son tour en sens inverse (fig. 6) jusqu'à ce que ladite ouverture 1a soit tournée vers le bas.

A ce moment, un palpeur 26 (fig. 2), associé à une came portée par l'arbre 8 solidaire de la cuve 1, coupe automatiquement l'alimentation du moto-réducteur 2 et assure à nouveau l'immobilisation angulaire de ladite cuve. Le contenu de celle-ci se déverse automatiquement dans la fosse 3 par gravité. La machine se trouve alors prête pour un nouveau cycle de fonctionnement.

comprend finalement que les manoeuvres successives de fermeture de la porte 18 après chargement de la cuve, ouverture de cette porte en fin de traitement, et déchargement du contenu sont effectuées de manière automatique moyennant la simple commande du moto-réducteur 2.

On conçoit que l'invention est susceptible d'être appliquée aux cuves de traitement à section circulaire ; il suffit à cet effet soit d'agencer convenablement les deux paires de biellettes 19 pour déterminer un effet de butée de la porte contre la paroi de la cuve 1 aux deux positions extrêmes d'ouverture et de fermeture, soit de faire comporter à cette cuve deux butées propres à coopérer avec la porte 18 en vue d'assurer l'entraînement de cette cuve dans les deux sens de rotation.

## Revendications

1. Machine industrielle à cuve tournante, du genre comprenant une porte (18) apte à obturer l'ouverture d'accès (1a) ménagée dans la paroi longitudinale de la cuve (1), caractérisée en ce que l'entraînement en rotation de cette dernière est opéré par l'intermédiaire de la porte (18) qui est reliée à ladite cuve par un système de biellettes latérales (19) et dont le déplacement angulaire par rapport à la cuve est limité par effet de butée.

2. Machine suivant la revendication 1, caractérisée en ce que le système de biellettes latérales (19) est agencé pour conférer à la porte (18) deux positions extrêmes qui correspondant respectivement à l'ouverture et à la fermeture et pour chacune desquelles ladite porte (18) est en butée contre la paroi de la cuve (1).

3. Machine suivant l'une quelconque des revendications 1 et 2, caractérisée en ce que l'entraînement de la porte (18) est opéré à l'aide d'un bras radial (12) qui est fixé à l'un des côtés (18a) de ladite porte par l'intermédiaire d'un système d'excentrique (23) qui permet l'allongement dudit bras lors des manoeuvres d'ouverture et de fermeture tout en interdisant toute ouverture intempestive de la porte sous l'effet de choc de la charge.

4. Machine suivant la revendication 3, caractérisée en ce que le système d'excentrique comprend un goujon (20) qui est porté par le côté considéré (18a) de la porte (18) et qui est engagé dans un logement excentré (23a) d'un excentrique (23) monté à rotation dans un petit carter (21) prévu à l'extrémité libre du bras radial (12).

5. Machine suivant l'une quelconque des revendications 1 à 4, caractérisée en ce qu'à la cuve (1) est associé un dispositif de freinage électromagnétique (14-15-16-17) qui assure l'immobilisation de ladite cuve lors des phases d'ouverture et de fermeture de la porte (18) et interdit toute ouverture intempestive de cette porte en cas d'accélération sous l'effet d'un balourd de la charge.

6. Machine suivant la revendication 4 et 5, caractérisée en ce que l'un (6) des flasques (5-6) de la cuve (1) est rendu solidaire d'un arbre (8) sur lequel tourne librement un arbre tubulaire (11) qui porte le bras radial (12) et que est entraîné par le moto-réducteur (2) de la machine.

7. Machine suivant la revendication 6, caractérisée en ce qu'entre le flasque (6) de la cuve (1) et l'arbre (8) est interposé un mécanisme d'auto-centrage (7) associé à une cloche de liaison (10) élastiquement déformable.

## Patentansprüche

1. Industriemaschine mit sich drehendem Behälter mit einer Zugangsöffnung (1a) in der Längswand des Behälters (1), die mit einer Tür (18) zum Verschliessen versehen ist, dadurch gekennzeichnet, daß der Drehantrieb des Behälters unter Zwischenschaltung der Tür (18) erfolgt, die durch seitliche Schwingen (19) mit dem genannten Behälter verbunden ist und deren Winkelverschiebung relativ zum Behälter durch Anschläge begrenzt ist.

2. Maschine nach Anspruch 1, dadurch gekennzeichnet, daß die seitlichen Schwingen (19) derart ausgebildet sind, daß die Tür (18) zwischen der Öffnungs- und der Verschlußstellung bewegbar ist und in diesen Grenzstellungen an der Wand des Behälters (1) anschlägt.

3. Maschine nach einem der Ansprüche 1 oder 2, dadurch gekennzeichnet, daß der Antrieb der Tür (18) mit Hilfe einer Kurbel (12) erfolgt, die an einer der Seiten (18a) der genannten Tür mittels eines Exzenters (23) angelenkt ist, der die Verlagerung des Anlenkpunktes bei den Öffnungs- und Schließvorgängen ermöglicht und zugleich jeglichem ungewollten Öffnen der Tür durch Stoßwirkung der Ladung entgegenwirkt.

4. Maschine nach Anspruch 3, dadurch gekennzeichnet, daß die Exzenteranordnung einen auf der antriebsseitigen Seite (18a) der Tür (18) vorgesehenen Stiftbolzen (20) aufweist, der in eine exzentrische Aufnahme (23a) eines Exzenters (23) eingreift, der drehbar in einer kleinen, am freien Ende der Kurbel (12) vorgesehenen Lagerschale (21) angeordnet ist.

5. Maschine nach einem der Ansprüche 1 bis 4, dadurch gekennzeichnet, daß der Behälter (1) mit einer elektromagnetischen Bremsvorrichtung (14, 15, 16, 17) verbunden ist, die den Stillstand des Behälters während der Öffnungs- und Schließphasen der Tür (18) sichert und jeglichem ungewollten Öffnen der Tür im Falle einer Beschleunigung unter Wirkung einer Unwucht der Ladung entgegenwirkt.

6. Maschine nach den Ansprüchen 4 und 5, dadurch gekennzeichnet, daß die eine (6) der Seitenwände (5, 6) des Behälters (1) mit einer Welle (8) fest verbunden ist, auf der eine rohrförmige Welle (11), die die Kurbel (12) trägt und durch den Getriebemotor (2) der Maschine angetrieben wird, frei drehbar angeordnet ist.

7. Maschine nach Anspruch 6, dadurch gekennzeichnet, daß zwischen der Seitenwand (6) des Behälters (1) und der Welle (8) eine Anordnung zum zentrischen Spannen (7) vorgesehen ist, die eine elastisch deformierbare Befestigungsglocke enthält.

**Claims**

1. Industrial machine with rotating vessel, of the type comprising a door (18) adapted to obturate the access opening (1a) made in the longitudinal wall of the vessel (1), characterized in that the latter is driven in rotation via the door (18) which is connected to said vessel by a system of lateral rods (19) and of which the angular displacement with respect to the vessel is limited by effect of abutment.

2. Machine according to Claim 1, characterized in that the system of lateral rods (19) is arranged to give the door (18) two extreme positions which corresponding (sic.) respectively to the opening and to the closure and for each of which said door (18) is in abutment against the wall of the vessel (1).

3. Machine according to either one of Claims 1 and 2, characterized in that drive of the door (18) is effected with the aid of a radial arm (12) which is fixed to one of the sides (18a) of said door via an eccentric system (23) which allows elongation of said arm during the manoeuvres of opening and of closure whilst prohibiting any untimely opening of the door under the effect of shock of the load.

4. Machine according to Claim 3, characterized in that the eccentric system comprises a pin (20) which is borne by the side (18a) of the door (18) in question and which is engaged in an eccentric housing (23a) of an eccentric (23) mounted to rotate in a small housing (21) provided at the free end of the radial arm (12).

5. Machine according to any one of Claims 1 to 4, characterized in that there is associated with the vessel (1) an electro-magnetic braking device (14-15-16-17) which ensures immobilization of said vessel during the phases of opening and of closure of the door (18) and prohibits any untimely opening of this door in the case of acceleration under the effect of unbalance of the load.

6. Machine according to Claim 4 and 5, characterized in that one (6) of the side elements (5-6) of the vessel (1) is rendered fast with a shaft (8) on which freely rotates a tubular shaft (11) which bears the radial arm (12) and which is driven by the gear motor (2) of the machine.

7. Machine according to Claim 6, characterized in that, between the side element (6) of the vessel (1) and the shaft (8), there is interposed a self-centering mechanism (7) associated with an elastically, deformable connecting bell element (10).

4

Fig. 1

*Fig. 2*

EP 0 287 484 B1

*Fig. 3*

EP 0 287 484 B1

Fig. 4

Fig. 5

Fig. 6